# EUROPEAN PATENT APPLICATION

(11) **EP 4 163 682 A1**
(43) Date of publication of application: **12.04.2023**
(21) Application number: 22210676.7
(22) Date of filing: 04.12.2018
(51) Int. Cl.: G02B 3/12, G02B 13/00, G02B 3/14

(54) **OPTICAL ZOOM DEVICE WITH FOCUS TUNABLE LENS CORES**

(30) Priority: 04.12.2017 EP 17205137
(62) Divisional of application: 18814583.3
(71) Applicant: Nextlens Switzerland AG, 8953 Dietikon (CH)
(72) Inventor: ASCHWANDEN, Manuel, 6319 Allenwinden (CH); SMOLKA, Stephan, 8006 Zürich (CH); NIEDERER, David Andreas, 5024 Küttigen (CH); GEISSNER, Markus, 8962 Bergdietikon (CH); PATSCHEIDER, Roman, 8408 Winterthur (CH)
(74) Representative: Schulz Junghans Patentanwälte PartGmbB

(57) **Abstract**

The present invention relates to an Optical zoom device (1), comprising a first lens (10) having an adjustable focal length and a second lens (20) having an adjustable focal lens, wherein each lens (10, 20) comprises a lens core (11, 21) filled with a transparent fluid (12, 22), wherein the respective lens core (11, 21) comprises a first wall (13, 23) in the form of an elastically deformable membrane and a transparent second wall (14, 24) facing the first wall (13, 23), wherein the fluid (12, 22) is arranged between the two walls (13, 23; 14, 24) of the respective lens core (11, 21), and wherein the respective lens (10, 20) comprises a lens shaping member (15, 25) interacting with the respective membrane (13, 23) for adjusting the focal length of the respective lens (10, 20) and/or for stabilizing an image generated with help of the two lenses (10, 20), wherein the optical zoom device (1) comprises a first and a separate second lens barrel (30, 31), wherein the first lens core (11) is mounted on the first lens barrel (30) and the second lens core (21) is mounted on the second lens barrel (31), wherein the optical zoom device (1) comprises at least one actuator (40) associated to the first lens (10) for generating said interaction of the lens shaping member (15) of the first lens (10) with the membrane (13) of the first lens (10) for adjusting said focal length of the first lens (10), as well as at least one actuator (41) associated to the second lens (20) for generating said interaction of the lens shaping member (25) of the second lens (20) with the membrane (23) of the second lens (20) for adjusting said focal length of the second lens (20).

## Description

The present invention relates to an optical zoom device using focus tunable lenses.

Particularly, regarding such optical zoom devices it is highly desirable to have a very compact form factor using known fluidic lenses with adjustable focal length. This allows one to construct compact optical zoom devices particularly comprising proven components.

The above-described objective is solved by an optical zoom device having the features of claim 1. Preferred embodiments of the present invention are stated in the sub claims and are described below.

According to claim 1, an optical zoom device is disclosed, comprising
- a first lens having an adjustable focal length and a second lens having an adjustable focal length, wherein each lens comprises a lens core filled with a transparent fluid, wherein the respective lens core comprises a transparent first wall in the form of an elastically deformable membrane and a transparent second wall facing the first wall, wherein the fluid is arranged between the two walls of the respective lens core, and wherein the respective lens comprises a lens shaping member interacting with the respective membrane for adjusting the focal length of the respective lens and/or for stabilizing an image generated with help of the two lenses,
- wherein the optical zoom device comprises a first and a separate second lens barrel, wherein the first lens core is mounted on the first lens barrel and the second lens core is mounted on the second lens barrel
- wherein the optical zoom device comprises at least one actuator associated to the first lens for generating said interaction of the lens shaping member of the first lens with the membrane of the first lens for adjusting said focal length of the first lens, as well as at least one actuator associated to the second lens for generating said interaction of the lens shaping member of the second lens with the membrane of the second lens for adjusting said focal length of the second lens.

In other words, more specifically, the current invention describes a new approach to make liquid-membrane based optical zoom lenses incorporating optical image stabilization. Particularly, the present invention also allows to use existing components such as the first and the second lens for making a reliable optical system. Furthermore, particularly, the use of simple components allows to build a complex camera module using component that can be tested separately before assembling them in the system especially the optical quality of the (e.g. plastic) lens stack and the tunable lens can be evaluated before building into a system. Using particularly linear actuators such as voice coil actuators, piezo actuators or shape memory alloys also helps in the implementation of a very compact form factor.

Furthermore, an optical zoom device according to the present invention can also be combined with an optical image stabilization system which can use either an image sensor shifting mechanism or a prism tilt mechanism or a tunable prism. Alternatively, the optical image stabilization can be achieved by appropriately deforming the first and/or the second lens so that the latter represent adjustable prisms.

Further, according to an embodiment of the present invention, the respective lens barrel holds at least one rigid lens, particularly a plurality of rigid lenses. Particularly, the first and the second lens each comprise an optical axis, which optical axes can be aligned with each other, i.e. form a common optical axis. The optical axis of the first lens particularly also forms an optical axis of the rigid lenses of the first lens barrel. Likewise, the optical axis of the second lens also forms an optical axis of the rigid lenses of the second lens barrel.

Furthermore, according to an embodiment, for achieving a compact device height, the first lens has an outer diameter (e.g. perpendicular to an optical axis of the first lens) that is equal to (or larger than) an outer diameter of the first lens barrel (e.g. perpendicular to said optical axis/radial direction of the lens barrel) in the same direction, wherein the first lens barrel comprises an opening for holding the first lens. Particularly, a lateral wall delimiting said opening of the first lens barrel that is configured to hold the first lens can comprise one or several recesses for receiving a portion of the first lens, respectively, which allows said diameters to be of equal size.

Further, in the same manner, the second lens has an outer diameter (e.g. perpendicular to an optical axis of the second lens) according to an embodiment that is equal to (or larger than) an outer diameter of the second lens barrel (e.g. perpendicular to the optical axis of the second lens/radial direction of the second lens barrel) in the same direction in the same direction, wherein the second lens barrel comprises an opening for holding the second lens. Particularly, a lateral wall delimiting said opening of the second lens barrel that is configured to hold the second lens can comprise one or several recesses for receiving a portion of the second lens, respectively, which allows said diameters again to be of equal size.

Furthermore, according to an embodiment of the present invention, the optical device comprises a prism or a mirror.

Further, according to an embodiment of the present invention, the optical zoom device comprises a third barrel holding said prism or said mirror, which third barrel is connected to the first barrel, so that the first lens is arranged between the prism or mirror and the second lens in the optical path of the optical zoom device.

According to an alternative embodiment, the prism or mirror is arranged between the first lens and the second lens in the optical path of the optical zoom device.

Furthermore, according to an embodiment of the present invention, the optical device comprises an image sensor for generating said image to be stabilized.

Particularly, in an embodiment of the present invention, the image sensor is mounted to the second lens barrel, particularly such that it faces the second lens.

Further, according to an embodiment of the present invention, the at least one actuator of the first lens is configured to move the lens shaping member of the first lens with respect to the lens core of the first lens for adjusting the focal length of the first lens. Alternatively, the at least one actuator of the first lens is configured to move the lens core of the first lens with respect to the lens shaping member of the first lens for adjusting the focal length of the first lens.

Further, in an embodiment, the at least one actuator of the second lens is configured to move the lens shaping member of the second lens with respect to the lens core of the second lens for adjusting the focal length of the second lens. Alternatively, the at least one actuator of the second lens is configured to move the lens core of the second lens with respect to the lens shaping member of the second lens for adjusting the focal length of the second lens.

Particularly, having a fixed lens shaping member and a moving flat lens core of the respective lens results in an alignment insensitive design, due to the fact that a lateral shift of the respective flat lens core is optically not visible.

Further, according to an embodiment of the present invention, the first lens comprises two, three or particularly four actuators, that are configured to move the lens shaping member of the first lens with respect to the lens core of the first lens for adjusting the focal length of the first lens or that are configured to move the lens core of the first lens with respect to the lens shaping member of the first lens for adjusting the focal length of the first lens.

Furthermore, according to an embodiment, the second lens may also comprises two, three or even four actuators that are configured to move the lens shaping member of the second lens with respect to the lens core of the second lens for adjusting the focal length of the second lens or that are configured to move the lens core of the second lens with respect to the lens shaping member of the second lens for adjusting the focal length of the second lens.

Further, according to an embodiment of the present invention, the optical zoom device is configured to tilt the lens shaping member of the first lens with respect to the lens core of the first lens using said actuators of the first lens for stabilizing said image. Alternatively, the optical zoom device can be configured to tilt the lens core of the first lens with respect to the lens shaping member of the first lens using said actuators of the first lens for stabilizing said image.

Furthermore, according to an embodiment of the present invention, the optical zoom device is configured to tilt the lens shaping member of the second lens with respect to the lens core of the second lens using said actuators of the second lens for stabilizing said image. Alternatively, the optical zoom device can also be configured to tilt the lens core of the second lens with respect to the lens shaping member of the second lens using said actuators of the second lens for stabilizing said image generated by the optical zoom device.

Further, according to an embodiment of the present invention, the optical device is configured to use merely the first or the second lens for stabilizing said image. This means that the other lens not used for image stabilization merely adjusts its focal length and all image stabilization is performed by only one of the two focus adjustable lenses.

Further, according to an embodiment of the present invention, the optical device is configured to tune or tilt the prism or to tune or tilt the mirror for stabilizing said image. Here, both the first and the second lens can be configured to merely adjust their focal lengths for achieving the zoom function of the optical zoom device.

Particularly, according to an embodiment of the present invention, the optical device is configured to one of:
- shift the first lens perpendicular to an optical axis of the first lens with respect to the image sensor to stabilize the image and/or shift the second lens perpendicular to an optical axis of the second lens with respect to the image sensor to stabilize the image,
- shift a rigid lens perpendicular to an optical axis of the first lens with respect to the image sensor to stabilize the image and/or shift a rigid lens perpendicular to an optical axis of the second lens with respect to the image sensor to stabilize the image and/or shift a rigid lens perpendicular to an optical axis of the third lens barrel with respect to the image sensor to stabilize the image, shift the image sensor perpendicular to an optical axis of the first lens with respect to the first lens to stabilize the image, and/or shift the image sensor perpendicular to an optical axis of the second lens with respect to the second lens to stabilize the image.

Further, according to an embodiment of the present invention, the first lens forms a zoom lens defining a field of view of the optical zoom device and the second lens is configured to refocus the image on the image sensor.

Further, according to an embodiment of the present invention, the lens shaping member of the first lens defines an area of the membrane of the first lens that has an adjustable curvature, and/or that the lens shaping member of the second lens defines an area of the membrane of the second lens that has an adjustable curvature. The area of the respective membrane can be defined by a circumferential or annular portion of the respective lens shaping member.

Particularly, the respective lens shaping member may comprise a circular portion resulting in a rotationally symmetrical area of the respective lens. However, the respective lens shaping member may also comprise a square portion which then results into a cylindrical lens. In principle, any other lens shaping member shape is possible. Further, particularly, the lens shaping member can be an injection molded part, a metal, glass or a silicon (etched) lens shaping member.

Particularly, the optical device can be configured to adjust the respective curvature by an interaction of the respective lens shaping member with the respective membrane, e.g. by pushing the respective lens shaping member against the respective membrane or by pulling on the respective membrane by means of the respective lens shaping member.

Particularly, the respective lens shaping member can contact the respective membrane directly or indirectly via another material layer (e.g. formed by a glue etc.). The respective lens shaping member can further be attached to the respective membrane by bonding it directly to the membrane or via another material layer such as a glue layer.

Particularly, according to an embodiment, the respective lens shaping member can be plasma bonded to the respective membrane.

Particularly, the notion according to which the respective lens shaping member defines an area of the membrane that has an adjustable curvature may mean that the respective lens shaping member delimits, by being attached to the membrane or by contacting the latter, an elastically expandable (e.g. circular) area of the respective membrane, wherein particularly the respective area extends up to an (e.g. circumferential) inner edge of the respective lens shaping member. The respective area may also be denoted as optically active area since the light passes through the respective area of the respective (first or second) lens and is affected by the curvature of the respective area.

When the respective lens shaping member presses against the membrane, the respective membrane is expanded and said curvature of said area of the membrane increases due to the fluid residing in the respective lens core. Likewise, when the respective lens shaping member pushes less against the respective membrane or even pulls the respective membrane, said curvature of the area of the respective membrane decreases.

Increasing curvature means that the area of the respective membrane may develop a more pronounced convex bulge, or that the area of the respective membrane changes from a concave or a flat state to a convex one. Likewise, a decreasing curvature means that the area of the respective membrane changes from a pronounced convex state to a less pronounced convex state or even to a flat or concave state, or changes from a flat or concave state to an even more pronounced concave state.

The respective membrane can be made of at least one of the following materials: a glass, a polymer, an elastomer, a plastic or any other transparent and stretchable or flexible material. For example, the membrane may be made out of a silicone-based polymer such as poly(dimethylsiloxane) also known as PDMS or a polyester material such as PET or a biaxially-oriented polyethylene terephtalate (e.g. "Mylar").

Further, the membrane can comprise a coating, in particular an anti-reflection coating made of nanostructures, or nano-particles or sol-gel coatings. Further, the membrane can also be structured, e.g. comprises a structured surface or have a variable thickness or stiffness across the membrane.

Further, said fluid preferably is or comprises a liquid, a liquid metal, a gel, a gas, or any transparent, absorbing or reflecting material which can be deformed. For example, the fluid may be a silicone oil.

Further, according to an embodiment of the present invention, the optical zoom device comprises a wide mode in which the area of the membrane of the first lens is concave and the area of the membrane of the second lens is convex.

Furthermore, according to an embodiment of the present invention the optical zoom device also comprises a tele mode in which the area of the membrane of the first lens is convex and the area of the membrane of the second lens is concave. According to a further embodiment, the optical zoom device also comprises a mid zoom state in which the areas of the membranes of the two lenses are only slightly convex, or lightly concave, or even flat. In case both the first and the second lens are convex, the closest macro focus can be achieved.

Further, according to an embodiment of the present invention, the respective actuator is one of or comprises one of: a linear actuator, a piezo actuator, a shape memory alloy, a stepper motor, an electromagnetic actuator, a moving coil, a moving magnet.

Further, according to an embodiment of the present invention, the first lens comprises a single linear actuator (particularly a piezo actuator) that is configured to move the lens shaping member of the first lens with respect to the lens core of the first lens (or to move the lens core of the first lens with respect to the lens shaping member of the first lens) for adjusting the focal length of the first lens, and wherein the second lens comprises four linear actuators that are configured to move the lens core of the second lens with respect to the lens shaping member of the second lens for adjusting the focal length of the second lens and to tilt the lens core of the second lens about two different axes for stabilizing said image, wherein the respective linear actuator can comprise a shape memory alloy for moving and tilting the lens core of the second lens with respect to the lens shaping member of the second lens.

Further, according to an embodiment of the present invention, the respective actuator of the first lens is arranged outside the first lens barrel on a (e.g. circumferential) side wall of the first lens barrel. Further, in an embodiment, the respective actuator of the second lens is arranged outside the second lens barrel on a (e.g. circumferential) side wall of the second lens barrel.

Particularly, an advantageous minimal configuration of actuators comprises two actuators per lens. Here, according to an embodiment of the present invention, each of said two actuators of the first lens is connected to a region of the lens shaping member of the first lens to exert a force on the lens shaping member of the first lens via the respective region (e.g. so as to adjust the focal length of the first lens and/or for stabilizing said image) or each of said two actuators of the first lens is connected to a region of the lens core of the first lens to exert a force on the lens core of the first lens via the respective region (e.g. to adjust the focal length of the first lens and/or for stabilizing said image), wherein said two regions face each other in a first direction. Further, each of said two actuators of the second lens is connected to a region of the lens shaping member of the second lens to exert a force on the lens shaping member of the second lens via the respective region (e.g. to adjust the focal length of the second lens and/or for stabilizing said image) or each of said two actuators of the second lens is connected to a region of the lens core of the second lens to exert a force on the lens core of the second lens via the respective region (e.g. to adjust the focal length of the second lens and/or for stabilizing said image), wherein said two regions face each other in a second direction, and wherein said second direction is different from the first direction. Particularly, said first and second direction are skew and extend in parallel planes. Particularly, said two directions are orthogonal.

Particularly, in the following, embodiments are described in which the respective lens shaping member is moved by the respective actuators while the lens core of the first lens is fixed to the first lens barrel, and the lens core of the second lens is fixed to the second lens barrel.

Particularly, in an embodiment, the optical device is configured to adjust the focal length of the first lens by exerting on each region of the lens shaping member of the first lens a force using the respective actuator, wherein these two forces are equal so that the lens shaping member of the first lens pushes against the membrane of the first lens or pulls on the membrane of the first lens so as to adjust the curvature of said area of the membrane of the first lens and therewith the focal length of the first lens.

Further, in an embodiment, for stabilizing said image, the optical device is configured to shift said image in a first shifting direction by exerting on each region of the lens shaping member of the first lens a force using the respective actuator, wherein these two forces are opposite and particularly of equal or substantially equal magnitude, so that the lens shaping member of the first lens is tilted about a first axis thereby shifting said image in said first shifting direction. Particularly, due to the tilting of the lens shaping member of the first lens with respect to the lens core of the first lens, the lens core of the first lens is formed into a prism, i.e., said area of the membrane of the first lens is tilted relative to the second wall of the lens core of the first lens.

Furthermore, in an embodiment, the optical device is configured to adjust the focal length of the second lens by exerting on each region of the lens shaping member of the second lens a force using the respective actuator, wherein these two forces are equal or substantially equal so that the lens shaping member of the second lens pushes against the membrane of the second lens or pulls on the membrane of the second lens so as to adjust the curvature of said area of the membrane of the second lens and therewith the focal length of the second lens.

Further, in an embodiment, for stabilizing said image, the optical device is configured to shift said image in a second shifting direction by exerting on each region of the lens shaping member of the second lens a force using the respective actuator, wherein these two forces are opposite and particularly of equal or substantially equal magnitude, so that the lens shaping member of the second lens is tilted about a second axis thereby shifting said image in said second shifting direction. Particularly, due to the tilting of the lens shaping member of the second lens with respect to the lens core of the second lens, the lens core of the second lens is formed into a prism, i.e., said area of the membrane of the second lens is tilted relative to the second wall of the lens core of the second lens.

Furthermore, alternatively, the actuators may also exert the forces described above on the respective lens core. Here, the lens shaping member of the first lens is fixed to the first lens barrel, and the lens shaping member of the second lens is fixed to the second lens barrel (of course, mixed configurations are also conceivable, i.e. in one of the two lenses the lens shaping member is moved while in the other lens the respective lens core is moved).

Particularly, in an embodiment, the optical device is configured to adjust the focal length of the first lens by exerting on each region of the lens core of the first lens a force using the respective actuator, wherein these two forces are equal or substantially equal so that the lens core of the first lens is pushed with the membrane of the first lens against the lens shaping member of the first lens or is moved away from the lens shaping member of the first lens so that the lens shaping member of the first lens pulls on the membrane of the first lens so as to adjust the curvature of said area of the membrane of the first lens and therewith the focal length of the first lens.

Further, in an embodiment, for stabilizing said image, the optical device is configured to shift said image in a first shifting direction by exerting on each region of the lens core of the first lens a force using the respective actuator, wherein these two forces are opposite and particularly of equal or substantially equal magnitude, so that the lens core of the first lens is tilted about a first axis with respect to the lens shaping member of the first lens thereby shifting said image in said first shifting direction. Particularly, due to the tilting of the lens core of the first lens, the lens core of the first lens is formed into a prism, i.e., said area of the membrane of the first lens is tilted relative to the second wall of the lens core of the first lens.

Further, in an embodiment, the optical device is configured to adjust the focal length of the second lens by exerting on each region of the lens core of the second lens a force using the respective actuator, wherein these two forces are equal or substantially equal so that the lens core of the second lens is pushed with the membrane of the second lens against the lens shaping member of the second lens or is moved away from the lens shaping member of the second lens so that the lens shaping member of the second lens pulls on the membrane of the second lens so as to adjust the curvature of said area of the membrane of the second lens and therewith the focal length of the second lens.

Further, in an embodiment, for stabilizing said image, the optical device is configured to shift said image in a second shifting direction by exerting on each region of the lens core of the second lens a force using the respective actuator, wherein these two forces are opposite and particularly of equal or substantially equal magnitude, so that the lens core of the second lens is tilted about a second axis with respect to the lens shaping member of the second lens thereby shifting said image in said second shifting direction. Particularly, due to the tilting of the lens core of the second lens, the lens core of the second lens is formed into a prism, i.e., said area of the membrane of the second lens is tilted relative to the second wall of the lens core of the second lens.

Furthermore, according to an embodiment, said two actuators of the first lens are arranged outside the first lens barrel on a [circumferential] side wall of the first lens barrel, wherein said two actuators face each other in a first direction running perpendicular to the optical axis of the first lens, and wherein said two actuators of the second lens are arranged outside the second lens barrel on a [circumferential] side wall of the second lens barrel, wherein said two actuators of the second lens face each other in a second direction running perpendicular to the optical axis of the second lens, wherein said second direction is different from the first direction. Particularly, said first and second direction are skew and extend in parallel planes. Particularly, said two directions are orthogonal.

Further, according to an embodiment of the present invention, each of the two actuators of the first lens comprises a pusher that is movable along an optical axis of the first lens, wherein each of said pushers of the first lens is connected to one of said regions of the lens shaping member of the first lens or of the lens core of the first lens to exert the respective force on the respective region. Further, in an embodiment, each of the two actuators of the second lens also comprises a pusher that is movable along an optical axis of the second lens, wherein each of said pushers of the second lens is connected to one of said regions of the lens shaping member of the second lens or of the lens core of the second lens to exert the respective force on the respective region.

Further, according to an embodiment of the present invention, the respective pusher is connected to the respective region via a latching connection, wherein particularly a section of the respective pusher engages with a recess of the respective region.

Further, according to an embodiment of the present invention, the respective pusher is connected to the respective region via a glued connection.

Further, according to an embodiment of the present invention, the respective pusher is connected to the respective region via a flexible piston.

Further, in an embodiment, each of said regions of the respective lens shaping member on which the respective actuator exerts a force can be formed as an arm protruding from said portion of the respective lens shaping member that defines the respective area of the membrane. Likewise, according to an embodiment, each of said regions of the respective lens core on which the respective actuator exerts a force can be formed as an arm protruding from the respective lens core, particularly from a lateral wall of the respective lens core.

Further, according to an embodiment of the present invention, each actuator of the two actuators of the first lens comprises an electrically conducting coil and a magnet structure comprising a first section having a first magnetization and an adjacent second section having a second magnetization, wherein the two magnetizations are antiparallel (i.e. are parallel but point in opposite directions), and particularly extend orthogonal to an optical axis of the first lens, wherein the coil comprises a first portion and a second portion, and wherein the first portion of the coil faces the first section of the magnet structure whereas the second portion of the coil faces the second section of the magnet structure. Further, particularly the coil comprises a conductor that extends around a coil axis of the coil, wherein the coil axis particularly extends parallel to said magnetizations.

Further, according to an embodiment, each actuator of the two actuators of the second lens may also comprise an electrically conducting coil and a magnet structure comprising a first section having a first magnetization and an adjacent second section having a second magnetization, wherein the two magnetizations are antiparallel (i.e. are parallel but point in opposite directions) and particularly extend orthogonal to an optical axis of the second lens, wherein the coil comprises a first portion and a second portion, and wherein the first portion of the coil faces the first section of the magnet structure whereas the second portion of the coil faces the second section of the magnet structure. Particularly, the coil comprises a conductor that extends around a coil axis of the coil, wherein the coil axis particularly extends parallel to said magnetizations of the respective magnet structure of an actuator of the second lens.

Further, according to an embodiment of the present invention, the magnet structure of the respective actuator of the first lens is rigidly coupled to the first lens barrel, whereas the coil of the respective actuator of the first lens is arranged on the pusher of the respective actuator of the first lens. Further, in an embodiment, the magnet structure of the respective actuator of the second lens is rigidly coupled to the second lens barrel, whereas the coil of the respective actuator of the second lens is arranged on the pusher of the respective actuator of the second lens.

Particularly, the optical zoom device can comprise two magnetic flux return structures, particularly in the form of an elongated plate, respectively. Particularly, each magnetic flux return structure is connected to both sections of a magnet structure of an actuator of the first lens as well as to both sections of a magnet structure of an actuator of the second lens. The respective return structure is configured to guide or return the magnetic flux from a section of the magnet structure to the adjacent section of the magnet structure to which it is connected. Particularly, the respective magnetic flux return structure can extend along the optical axis of the first lens and the optical axis of the second lens. Further, the two magnetic flux return structures face each other in a direction perpendicular to the said optical axes. Particularly, the respective magnetic flux return structure can be connected to or can be a part of a housing or shield enclosing the first and/or the second lens barrel.

Further, according to an embodiment of the present invention, the coil of the respective actuator of the first lens is rigidly coupled to the first lens barrel, whereas the magnet structure of the respective actuator of the first lens is arranged on the pusher of the respective actuator of the first lens. Further, in an embodiment, the coil of the respective actuator of the second lens is rigidly coupled to the second lens barrel, whereas the magnet structure of the respective actuator of the second lens is arranged on the pusher of the respective actuator of the second lens.

Further, according to an embodiment of the present invention, the respective coil can be embedded into a substrate, particularly in the form of a printed circuit board (PCB). Particularly, the optical zoom device can comprise two (e.g. elongated) substrates (e.g. PCBs), wherein each substrate comprises a coil of an actuator of the first lens as well as a coil of an actuator of the second lens. Particularly, the two substrates can be connected to a housing enclosing the first and/or the second lens barrel. Particularly, the two substrates can face each other in a direction perpendicular to the optical axis of the first lens and perpendicular to the optical axis of the second lens.

Alternatively, the optical zoom device can comprise two substrate assemblies, wherein each substrate assembly comprises two separate substrates electrically connected to each other by a flexible connector to provide electrical connections between the two substrates, wherein one of the two substrates comprises an embedded coil of an actuator of the first lens while the other substrate comprises a coil of an actuator of the second lens. Again, particularly, the two substrate assemblies can face each other in a direction perpendicular to the optical axis of the first lens and perpendicular the optical axis of the second lens.

Furthermore, in the present embodiments related to moving magnet structures arranged on pushers, each magnet structure is connected to a separate first magnetic flux return structure. The respective magnetic flux return structure is configured to guide or return the magnetic flux coming from one section of the magnet structure to the adjacent section of the magnet structure to which it is connected. Particularly, these first magnetic flux return structures are each rigidly coupled to the associated pusher and thus move together with the respective pusher.

Furthermore, particularly, the optical zoom device can comprise two second magnetic flux return structures, particularly in the form of an elongated plate, respectively. Particularly, each second magnetic flux return structure faces both sections of a magnet structure of an actuator of the first lens as well as both sections of a magnet structure of an actuator of the second lens. The respective second return structure is configured to guide or return the magnetic flux coming from a section of the magnet structure to an adjacent section of the magnet structure. Particularly, the respective second magnetic flux return structure can extend along the optical axis of the first lens and the optical axis of the second lens. Further, the two second magnetic flux return structures face each other in a direction perpendicular to the said optical axes. Particularly, the respective magnetic flux return structure can be connected to or can be a part of a housing or shield enclosing the first and/or the second lens barrel. Thus, here, every coil of an actuator is arranged between a first and a second magnetic flux return structure.

Further, in an embodiment, the respective actuator of the first lens comprises a coil holder for holding a substrate (and the coil embedded therein) of a substrate assembly, via which coil holder the respective coil embedded into the substrate is rigidly connected to the first lens barrel.

Further, in an embodiment, the respective actuator of the second lens also comprises a coil holder for holding a substrate (and the coil embedded therein) of a substrate assembly, via which coil holder the respective coil embedded into the substrate is rigidly connected to the second lens barrel.

The respective coil holder can comprise a recess for accommodating said flexible connector that connects the two substrates of a substrate assembly.

Further, according to an embodiment of the present invention, the optical zoom device is configured to apply an electrical current to the coil of the respective actuator of the first lens for interacting with a magnetic field of the magnet structure of the respective actuator of the first lens such that the pusher of the respective actuator of the first lens is moved along the optical axis of the first lens, wherein, depending on the direction of the current in the coil of the respective actuator of the first lens, the pusher of the respective actuator of the first lens is either moved such along the optical axis of the first lens that the lens shaping member of the first lens presses against the membrane of the first lens or pulls on the membrane of the first lens to adjust the focal length of the first lens and/or to stabilize said image.

Further, in an embodiment, the optical zoom device is configured to apply an electrical current to the coil of the respective actuator of the second lens for interacting with a magnetic field of the magnet structure of the respective actuator of the second lens such that the pusher of the respective actuator of the second lens is moved along the optical axis of the second lens, wherein, depending on the direction of the current in the coil of the respective actuator of the second lens, the pusher of the respective actuator of the second lens is either moved such along the optical axis of the second lens that the lens shaping member of the second lens presses against the membrane of the second lens or pulls on the membrane of the second lens to adjust the focal length of the second lens and/or to stabilize said image.

Further, particularly, the respective current flows in opposite directions in said two portions of the respective coil.

Further, according to an embodiment of the present invention, the pusher of the respective actuator of the first lens is elastically coupled to the first lens barrel via a spring structure such that the pusher of the respective actuator of the first lens is movable along the optical axis of the first lens. Furthermore, in an embodiment, the pusher of the respective actuator of the second lens is also elastically coupled to the second lens barrel via a spring structure such that the pusher of the respective actuator of the second lens is movable along the optical axis of the second lens.

Further, according to an embodiment of the present invention, the pusher of the respective actuator of the first lens is supported on ball bearings such that the pusher of the respective actuator of the first lens is movable along the optical axis of the first lens. Further, according to an embodiment, the pusher of the respective actuator of the second lens is supported on ball bearings, too, such that the pusher of the respective actuator of the second lens is movable along the optical axis of the second lens.

Particularly, the respective pusher can be supported via said ball bearings on a housing that may surround the first and/or second lens barrel and that may be rigidly coupled to the first and/or second lens barrel.

Particularly, the respective actuator of the first lens and the second lens can comprise a cage, e.g. in the form of a frame, for holding the respective ball bearings.

Further, according to an embodiment of the present invention, the optical device is configured to measure a movement of the respective pusher of the first lens along the optical axis of the first lens using a sensor associated to the respective pusher. Further, in an embodiment, the optical device is also configured to measure a movement of the respective pusher of the second lens along the optical axis of the second lens using a sensor associated to the respective pusher.

Further, according to an embodiment of the present invention, the respective sensor is one of: a Hall sensor, an inductive sensor, a capacitive sensor, an optical sensor.

Further, according to an embodiment of the present invention, the optical zoom device is configured to adjust the focal length of the first and the second lens in concert to generate a particular zoom range and a sharp image on the image sensor.

Further, according to an embodiment of the present invention, the first lens is configured to define the field of view of the optical zoom device (zoom range) and the second lens is configured to focus an image generated by the optical zoom device on the image sensor.

Further, according to an embodiment of the present invention, the optical zoom device is configured to receive an output signal of a gyroscope coupled to the optical zoom device, which output signal is indicative of an unwanted movement of the optical zoom device, wherein the optical zoom device is configured to use said output signal to stabilize said image.

Further, according to an embodiment of the present invention, the optical zoom device is configured to use said output signal to control the respective actuator (particularly individually) for stabilizing said image.

Particularly, in an embodiment the optical zoom device can be calibrated in transmission by recording the focal power versus the actuation current applied to the respective actuator using a linear current source or alternatively by measuring the focal power versus one or more sensor signals. This enables a fast initial tuning without the image sensor data processing.

The algorithm can be based on one or more lookup tables for different sensor conditions and known physical properties of the first and/or second lens such as orientation dependence. Alternatively, the algorithm may also be based on a function such as a polynomial of order n for changing an actuation current applied to the respective actuator in a closed loop.

Furthermore, the environmental temperature can be used as an additional sensor signal to modify the lookup table and correct effects of the first and/or second lens due to changes in temperature.

Further, the calibration information can be stored into a memory of the optical zoom device such as an EEPROM.

According to yet another aspect of the present invention, a device comprising an optical zoom device according to the present invention and a camera having a wider field of view than the optical zoom device is disclosed, wherein said camera has a lower F-number than the optical zoom device. Particularly, the F-number of an optical system such as a camera lens is the ratio of the system's focal length to the diameter of the entrance pupil.

This allows to have a very good optical quality for wide field of view cameras and still give a good optical zoom effect with less constraints on the F-number.

Particularly, the present invention can be applied to the following technical fields/can be used in the following devices:
Ophthalmology equipment such as phoropter, refractometer, pachymeter, biometrics, perimeter, refrakto-keratometer, refractive lens analyzer, tonometer, anomaloskop, kontrastometer, endothelmicroscope, anomaloscope, binoptometer, OCT, rodatest, ophthalmoscope, RTA, machine vision, mobile phone cameras, medical equipment, robot cam, virtual reality or augmented reality cameras, microscopes, telescopes, endoscopes, drone cameras, surveillance camera, web cams, automotive cameras, motion tracking, binoculars, research, automotive, projectors, ophthalmic lenses, range finder, bar code readers, 3D sensing.

Further features and advantages of the present inventions as well as embodiments of the present invention shall be described in the following with reference to the Figures, wherein
- Fig. 1: shows an embodiment of an optical zoom device comprising a piezo actuator for actuating a first lens as well as actuators comprising a shape memory alloy for actuating a second lens of the optical zoom device;
- Fig. 2: shows a perspective and cross-sectional view of the embodiment shown in Fig. 1;
- Fig. 3: shows a detail of the embodiment shown in Figs. 1 and 2;
- Fig. 4: shows a further detail of the embodiment shown in Figs. 1 to 3;
- Fig. 5: shows a perspective and cross-sectional view of a variant of the embodiment shown in Fig. 1 to 4;
- Fig. 6: shows a further aspect of the present invention, namely a device comprising a camera and a separate optical zoom device according to the present invention;
- Fig. 7: shows different possible arrangements of the first and the second lens regarding the location of the respective lens shaping member;
- Fig. 8: shows schematic illustrations of possible interactions of the respective lens shaping member with the associated membrane of a first or second lens for adjusting the focal length of the respective (first or second) lens;
- Fig. 9: shows further possible arrangements of the first and the second lens, particularly regarding the location of the respective lens shaping member;
- Fig. 10: shows a schematic illustration of a further embodiment of an optical zoom device according to the present invention;
- Fig. 11: shows a schematic illustration of two further embodiments of an optical zoom device according to the present invention, wherein for each embodiment only one half of the device is shown, i.e. the first embodiment is shown above the optical axes A, A'; the second embodiment is depicted below the optical axes A, A';
- Fig. 12: shows a perspective view of an embodiment of an optical zoom device according to the present invention of the kind shown in Fig. 11 (lower half);
- Fig. 13: shows a schematical illustration of the minimal configuration of four actuators as used in the embodiments of Figs. 10 to 12;
- Fig. 14: shows different embodiments regarding a connection between a pusher of an actuator and a lens shaping member (or lens core);
- Figs. 15 to 17: show details of the actuators of the embodiment of Figs. 11 (lower half) and 12;
- Fig. 18: shows an electropermanent magnet that can be used as an actuator in the framework of the present invention;
- Fig. 19: shows a schematicel representation of an optical sensor that can be used to measure the movement of the pusher of the respective actuator;
- Fig. 20: shows the principle of optical image stabilization and adjustment of the focal length of a (first or second) lens in case the respective lens core is moved by the actuators;
- Fig. 21: shows the principle of optical image stabilization and adjustment of the focal length of a (first or second) lens in case the respective lens shaping member is moved by the actuators; and
- Figs. 22 to 23: illustrate the use of a tiltable prism for stabilizing an image generated with help of the optical zoom device.

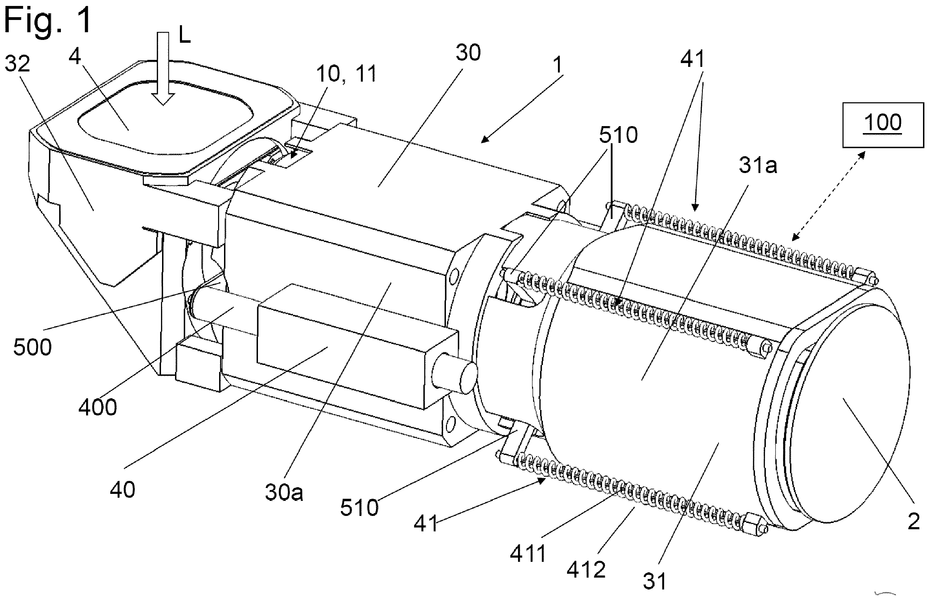

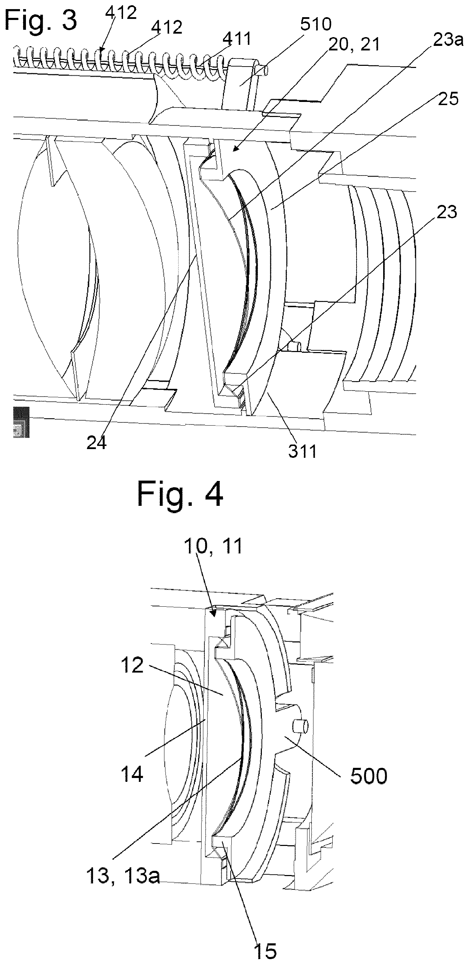

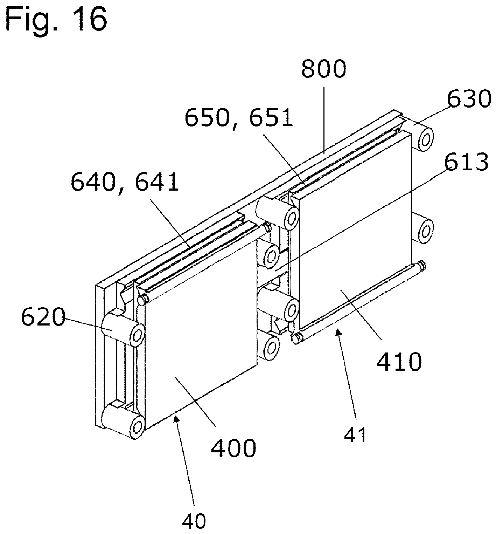

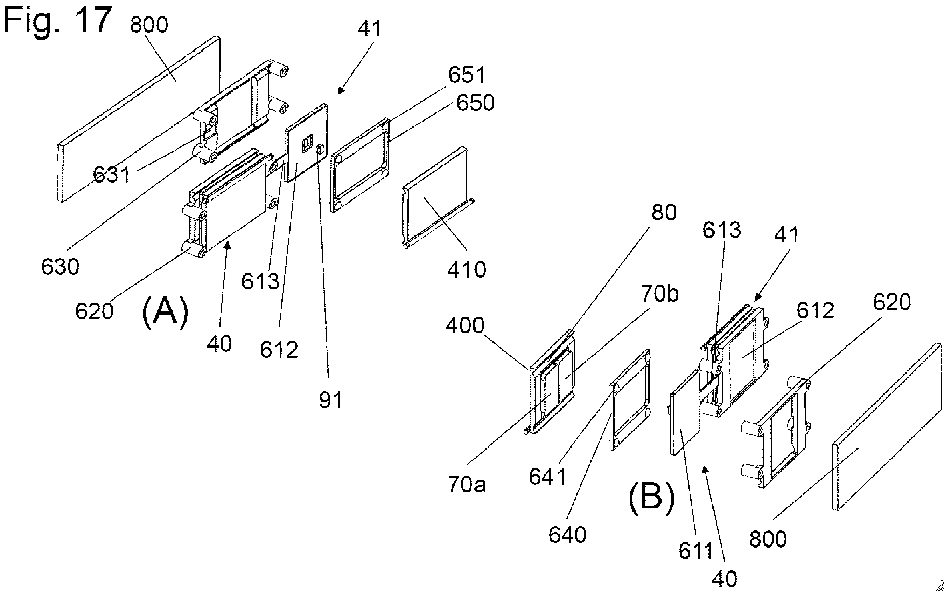

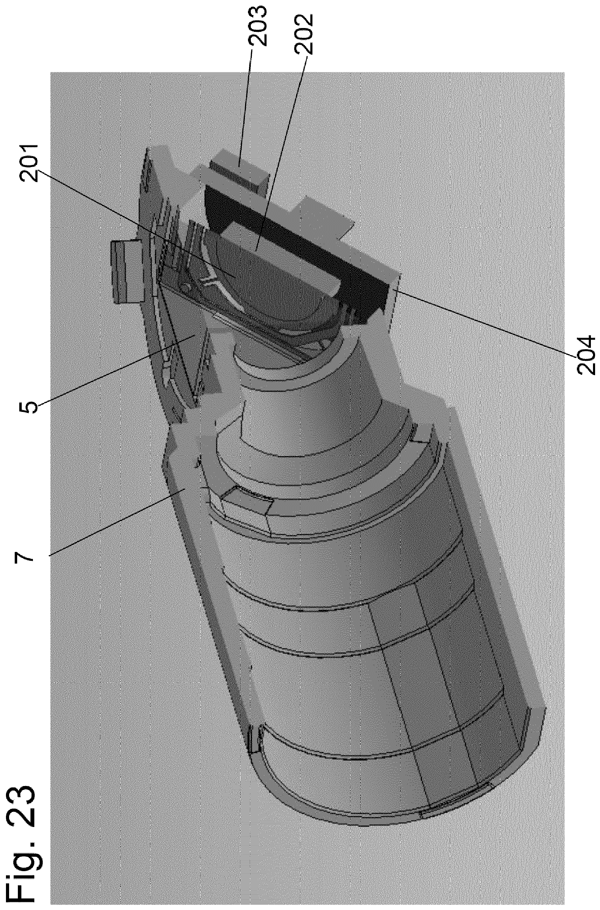

The present invention relates to an optical zoom device 1, wherein particular embodiments of this device are shown e.g. in Figs. 1 to 5, Figs. 7 to 17, and Figs. 22 to 23.

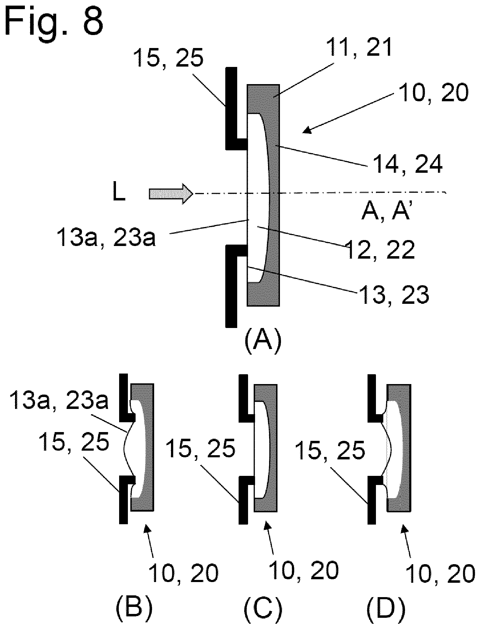

According thereto, an optical zoom device according to the present invention comprises a first lens 10 having an adjustable focal length and a second lens 20 having an adjustable focal lens, wherein, as e.g. shown in Fig. 8(A), each lens 10, 20 comprises a lens core 11, 21 filled with a transparent fluid (e.g. liquid) 12, 22, wherein the respective lens core 11, 21 comprises a first wall 13, 23 in the form of an elastically deformable membrane and a transparent second wall 14, 24 facing the first wall 13, 23, wherein the fluid 12, 22 is arranged between the two walls 13, 23; 14, 24 of the respective lens core 11, 21, and wherein the respective lens 10, 20 comprises a lens shaping member 15, 25 interacting with the respective membrane 13, 23 for adjusting the focal length of the respective lens 10, 20 and, according to some embodiments, also for stabilizing an image generated with help of the two lenses 10, 20. Further, the optical zoom device 1 particularly comprises a first and a separate second lens barrel 30, 31, which are connected to each other, wherein the first lens core 11 is mounted on the first lens barrel 30 and the second lens core 21 is mounted on the second lens barrel 31. Further, particularly, the optical zoom device 1 comprises an image sensor 2 that is mounted to the second lens barrel 31, such that the image sensor faces the second lens 20 and particularly also the first lens 10.

Particularly, the first lens 10, the second lens 20, and the image sensor can be aligned with respect to a common optical axis A, A'

For actuating the respective focus adjustable fluidic lens 10, 20 the optical zoom device 1 comprises at least one actuator 40 associated to the first lens 10, namely for generating said interaction of the lens shaping member 15 of the first lens 10 with the membrane 13 of the first lens 10 for adjusting said focal length of the first lens 10, as well as at least one actuator 41 associated to the second lens (20) for generating said interaction of the lens shaping member 25 of the second lens 20 with the membrane 23 of the second lens 20 for adjusting said focal length of the second lens 20.

The principle of the adjustment of the focal length of the first or second lens 10, 20 is e.g. depicted in Fig. 8(B), (C), and (D). Particularly, the lens shaping member 15, 25 of the respective lens 10, 20 defines an area 13a, 23a of the respective membrane 13, 23 that has an adjustable curvature. As can be seen from Figs. 8(A) to 8(D), light L imping on the respective area 13a, 23a will be deflected more strongly in case the respective area 13a, 23a has a larger curvature. Thus, the focal length of the respective lens 10, 20 can be adjusted by adjusting the curvature of said areas 13a, 23a using the respective lens shaping member 15, 25.

Particularly, the optical device 1 is configured to adjust the respective curvature by an interaction of the respective lens shaping member 15, 25 with the respective membrane 13, 23, e.g. by pushing the respective lens shaping member 15, 25 against the respective membrane 13, 23 as shown in Fig. 8(B) generating a more pronounces convex shape of the respective area 13a, 23b or lens 10, 20 or by pulling on the respective membrane 13, 23 by means of the respective lens shaping member 15, 25, as shown in Fig. 8(D) which allows realizing a concave shape of the respective area 13a, 23a or lens 10, 20.

Thus, by way of an axial movement of the respective lens shaping member 15, 25 towards or away from the respective lens core 11, 21, the focal length of the respective lens 10, 20 can be adjusted. Of course, this can also be achieved by moving the respective lens core 11, 21 and keeping the respective lens shaping member 15, 25 in a fixed position. Basically, in all embodiments either the respective lens shaping member 15, 25 is moved or the respective lens core 11, 21.

Furthermore, one of the lenses 10, 20 or both lenses 10, 20 can be used to also stabilize an image generated by means of the optical zoom device that is projected onto an image sensor 2 of the device 1. Such a stabilization allows to counteract an unwanted (e.g. sudden) movement of the optical zoom device 1. Such a movement can be detected by a gyroscope 100 as e.g. shown in Fig. 1, which generates an output signal indicative of the unwanted movement. This signal can be used to control the first and/or the second lens 10 in such a manner that the generated image is shifted so as to counteract the unwanted movement. Thus, the position of the image on the image sensor 2 can be maintained. This is denoted as optical image stabilization (OIS).

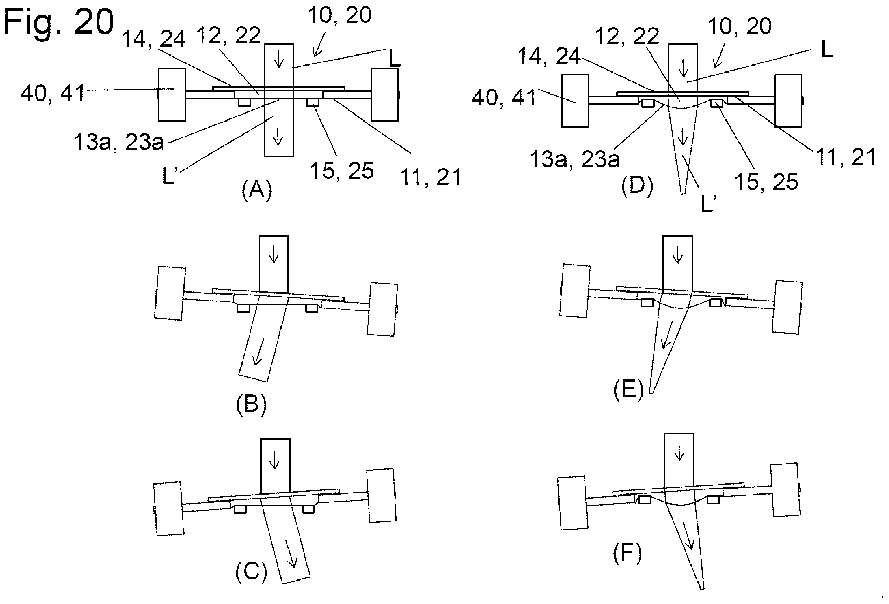

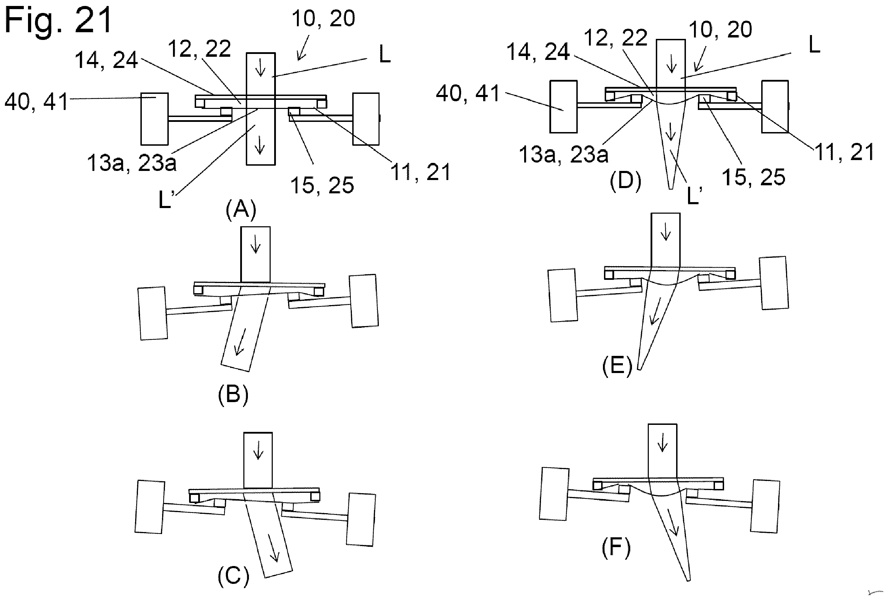

According to Figs. 20 and 21, optical image stabilization can be achieved by shifting the image in 2D with respect to the image sensor in an image plane of the image sensor 2. Such a shifting of the image is achieved by deflecting light L entering one of the lenses 10, 20 in two dimensions (i.e. in two different, particularly orthogonal direction) or by deflecting the incoming light L in a first direction with the first lens 10 and in a second direction with the second lens 20.

Figs. 20 and 21 show such an image shift as an example for a single direction using a single lens 10 or 20. Particularly, according to Fig. 20, the respective lens core 11, 12 can be tilted with respect to a fixed lens shaping member 15, 25 which deforms the respective lens core 11, 21 so that the latter forms an (adjustable) prism that deflects the outgoing light L' in a desired fashion. The amount of the tilt can be controlled using said output signal of the gyroscope 100. Particularly, Figs. 20(A) to 20(C) show tilting of the lens core 11, 21 with flat area 13a, 23a, while Figs. 20(D) to 20(F) show tilting of the respective lens core 11, 21 with a curved area 13a, 23a of the respective lens 10, 20.

Alternatively, as shown in Fig. 21, the respective lens shaping member 15, 25 can be tilted with respect to a fixed lens core 11, 21 which also generates an adjustable prism. Also here, Figs. 21(A) to 21(C) show tilting of the lens shaping member 15, 25 with flat area 13a, 23a, while Figs. 21(D) to 21(F) show tilting of the respective lens shaping member 15, 25 with a curved area 13a, 23a of the respective lens 10, 20. Thus, optical image stabilization and focus adjustments can be carried out simultaneously.

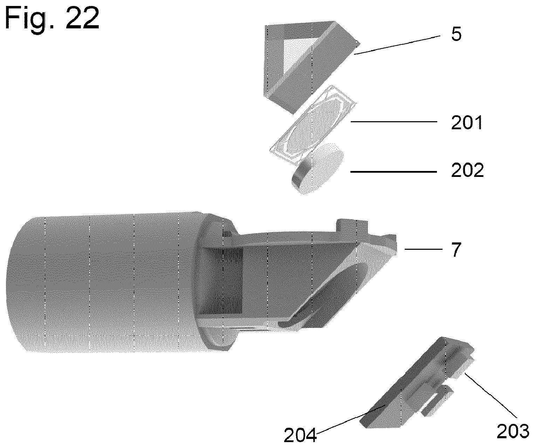

However, it is also possible to not use the lenses 10, 20 for optical image stabilization. Particularly, in the individual embodiments also variants are conceivable in which the image stabilization is performed using a tiltable prism 5 as shown in Fig. 22 to and 23. Here, the prism is arranged on a gimbal so that it can be tilted about two independent axes corresponding to a 2D shift of the image on the image sensor 2. The gimbal 201 can be tilted using a magnet 202 connected to the gimbal, wherein the magnet is moved by means of electrical currents applied to coils arranged in or on the substrate PCB 204. The movement of the gimbal 201/prism 202 can be measured by measuring the movement of the magnet 202 by means of a Hall sensor 203 that can be arranged on the substrate/PCB 204.

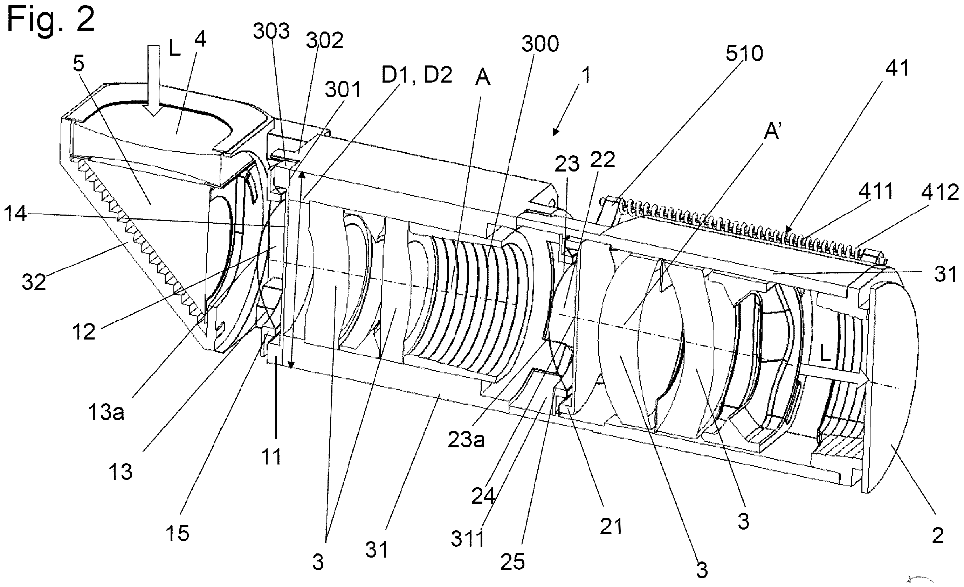

Fig. 1 shows in conjunction with Figs. 2 to 4 an embodiment of the present invention, an embodiment in which the first lens is actuated by a single linear actuator, particularly a piezo actuator, while the second lens 10 is actuated by four actuators 41 comprising a shape memory alloy 411, respectively. Here, these four actuators 41 are configured to adjust the focal length of the second lens 20 as well as for deflecting light passing through the second lens 20 for stabilizing an image generated with help of the lenses 10, 20 and projected onto the image sensor 2.

Particularly, the linear actuator 40 of the first lens 10 is arranged outside the first lens barrel 30 on a lateral wall 30a of the first lens barrel 30 and is configured to move a pusher 400 in the form of a rod along the optical axis A of the first lens 10, wherein the pusher 400 is connected to the lens shaping member 15 of the first lens 10, so that the focal length of the first lens 10 can be adjusted as explained above by moving the lens shaping member 15 with respect to the lens core 11 of the first lens 10, which lens core 11 is fixed to the first lens barrel 30 of the optical zoom device 1. Here, the first lens 10 is merely configured for adjustments of the focal length of the first lens 10, so that only a single actuator 40 is necessary.

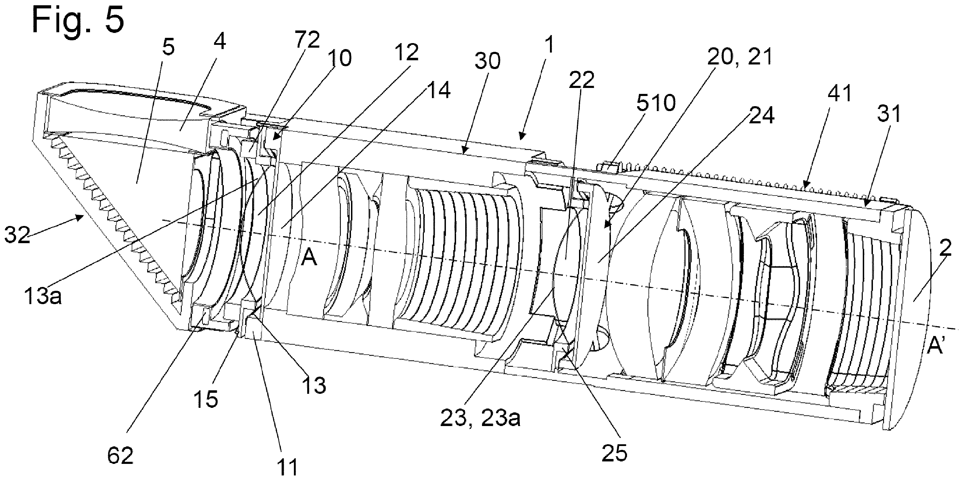

In an alternative embodiment shown in Fig. 5 such a single actuator 40 can be instead be formed by a voice coil motor comprising a coil 62 extending around the optical axis A which coil 62 faces a circumferential magnet 72 attached to the lens shaping member 15. Here, the device 1 is configured to apply an electrical current to the coil 62 so that the magnet 72 is pushed away from the coil 62 or pulled towards the coil 62 depending on the direction of the current in the coil 62 (for a given magnetization of the magnet 72 that is parallel to the optical axis A)

Further, the four actuators 41 of the second lens 20 are arranged on a lateral wall 31a of the second lens barrel 31 outside the latter. The four actuators 41 each comprise an elongated member 411 formed out of a shape memory alloy, wherein each member 411 is connected on one end to a region 510 of the lens core 21 of the second lens 20 and on the other end to the lateral wall 31a of the second lens barrel 31. Furthermore, a spring 412 is associated to each member 411 and also connected on one end to the respective region 510 and on the other end to the lateral wall 31a of the second lens barrel 31. By heating the individual member 411 to a certain temperature the respective member contracts against the restoring action of the respective spring 412. Thus, by actuating all members at the same time, the lens core 21 of the second lens can be pushed against the lens shaping member 25 of the second lens 20, which lens shaping member 25 is fixed with respect to the second lens barrel 31, or the lens core 21 can be moved away from the lens shaping member 25 so that the latter can also pull on the membrane 23 of the second lens 20 which allows to adjust the focal length of the second lens 20 as described above in conjunction with Figs. 8(A) to (D).

By actuating the actuators 41 e.g. in pairs (e.g. two actuators 41 which face each other diagonally in Fig. 1 with respect to the second lens barrel 31, the lens core 21 can be tilted about at least two different axes which allows to stabilize an image projected by the optical zoom device 1 onto the image sensor 2 as described above. Here, the image sensor 2 is mounted to an end of the second lens barrel 31 so that the image sensor 2 extends perpendicular to the optical axis A' of the second lens 20 and faces the second lens 20 in the direction of the optical axis A'.

Particularly, apart from the focus adjustable lenses 10, 20, each lens barrel can hold further rigid lenses 3 as indicated e.g. in Fig. 2. Further, the first lens barrel 30 can comprise a tube 300 extending in a circumferential manner on an inside of the first lens barrel 30, which tube 300 is configured to prevent stray light.

Furthermore, the optical zoom device 1 can comprise a front lens forming the first lens in the optical path of the device 1, which lens 4 is followed by a prism 5. Both prism 5 and front lens 4 are mounted to a third barrel 32 that is connected to the first lens barrel 30 so that the first lens barrel is arranged between the third (prism) barrel 32 and the second lens barrel 31.

Furthermore, for allowing a fast assembly of the optical zoom device, each two adjacent barrels 30, 31, 32 are configured to be connected to each other via positive connection.

Furthermore, as indicated in Fig. 2 for achieving a compact device height, the first lens 10 has an outer diameter D1 perpendicular to the optical axis A of the first lens 10 that is equal to an outer diameter D2 of the first lens barrel 30 perpendicular to said optical axis A of the first lens barrel 30, wherein the first lens barrel 30 comprises an opening 301 for holding the lens core 11 of the first lens 10. Particularly, a lateral wall 302 delimiting said opening 301 of the first lens barrel 30 comprises recesses 303 for receiving a portion of the lens core 11 of the first lens 10, respectively, which allows said diameters D1, D2 to be of equal size. This concept can also be applied to other interfaces between components of the device 1.

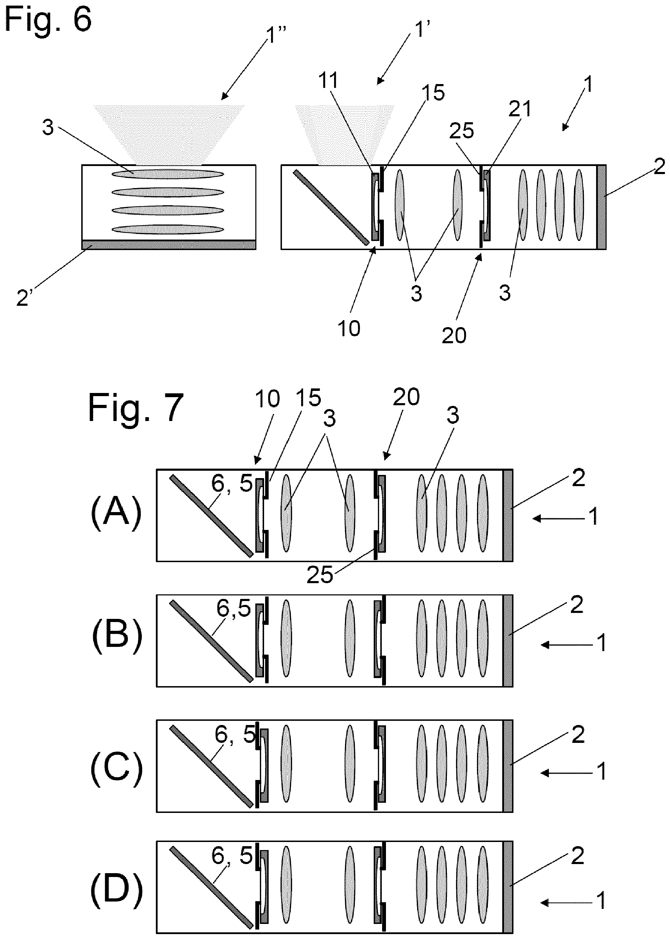

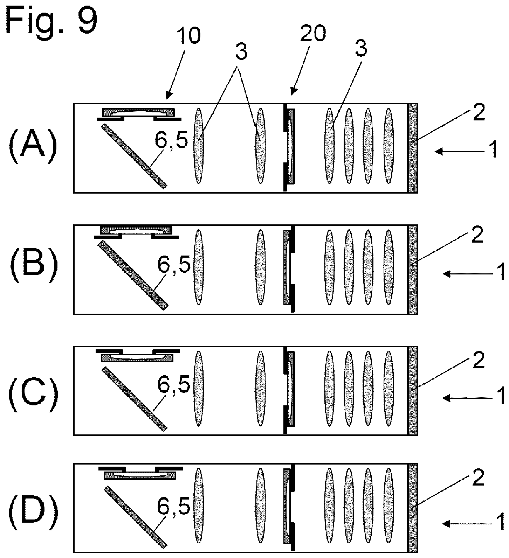

Regarding the placement of the individual components, particularly the lenses 10, 20 in the optical path of the device 1, various configurations are possible as shown in Figs. 7(A) to (D) and Figs. 9(A) to (D).

For instance, the first lens can be placed after a mirror 6 (or alternatively prism 5) in the optical path of the device as shown in Figs. 7(A) to (D), wherein the lens shaping member 15 of the first lens 10 can face away from the prism 5 / mirror 6 (Figs. 7(A) and 7(B)) or face the prism 5 or mirror 6 (Figs. 7(C) and 7(D)). In the same manner, the lens shaping member 25 of the second lens 20 can face the prism 5 / mirror 6 (Figs. 7(A) and 7(C)) or face away from the prism 5 / mirror 6 (Figs. 7(B) and 7(C)).

Fig. 9 (A) to (D) also shows these configurations, wherein here, in contrast to Fig. 8, the first lens is arranged in front of the prism 5 / mirror 6 in the optical path of the device 1, i.e., the prism 5 / mirror 6 is arranged between the first lens 10 and the second lens 20 in the optical path of the device.

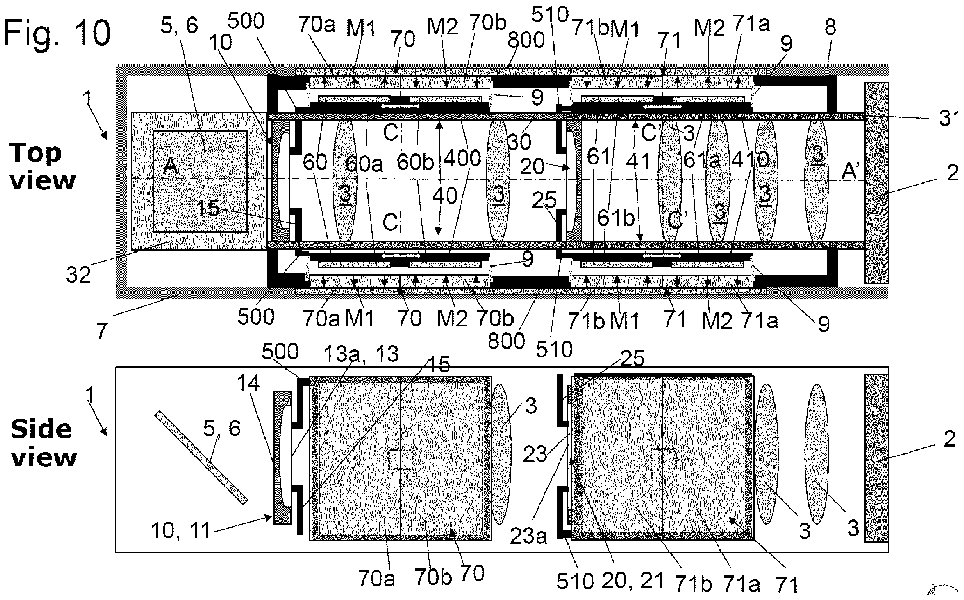

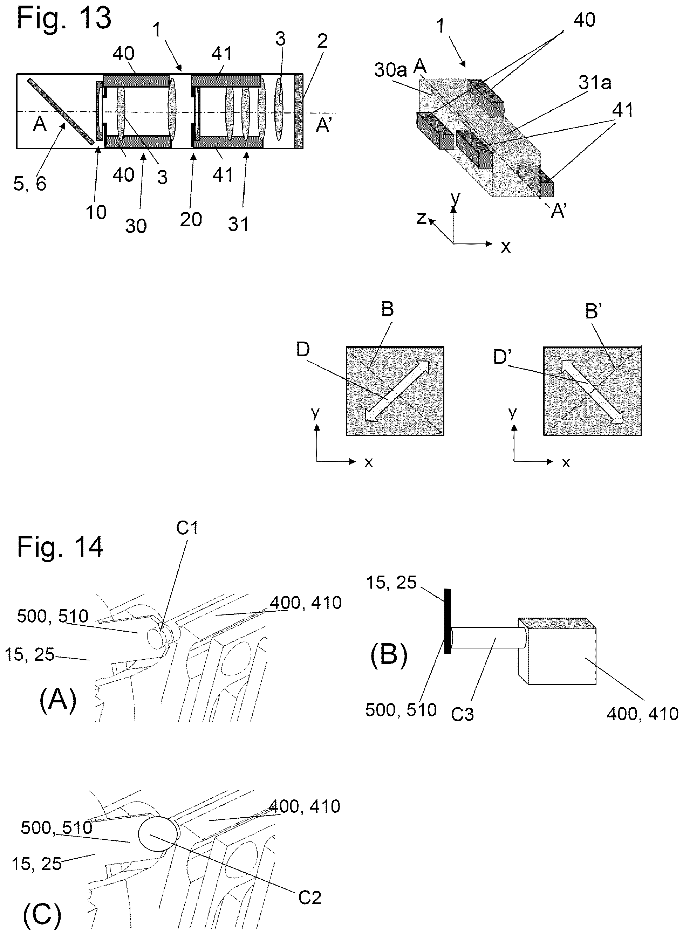

The further embodiments of the optical device shown in Figs. 10 to 17 relate to configurations, where each lens 10, 20 comprises two actuators 40, 41, wherein the two actuators 40 of the first lens 10 adjust the focal length and are configured to shift the image in a first shifting direction D, while the two actuators 41 of the second lens 20 also provide adjustment of the focal length, but are configured to shift the image in a different (e.g. orthogonal) second shifting direction D' as is indicated schematically in Fig. 13.

This is done by arranging the two actuators 40 of the first lens 10 on a lateral wall 30a of the first lens barrel 30 (outside the lens first barrel 30) such that they can each act on a region 500 of the lens shaping member 15 of the first lens 10, wherein these regions 500 face each other diagonally in the first shifting direction D'. In contrast thereto, regions 510 of the lens shaping member 25 on which the actuators 41 of the second lens 20 act face each other in a different (e.g. orthogonal) second shifting direction D'. Also here, the two actuators 441 are arranged on a lateral wall 31a of the second lens barrel 31 (outside the second lens barrel 31). This allows one to tilt the lens shaping member 15 of the first lens 10 about an associated axis B (perpendicular to D) while the lens shaping member 25 can be tilted about a different axis B' (perpendicular to D'). Particularly, these two axes B, B' can be oriented perpendicular with respect to each other.

In the following, it is assumed that the respective lens shaping member 15, 25 is moved while the respective lens core 11, 21 is fixed to the corresponding lens barrel 30, 31. However, it is always possible in modified embodiments to move the lens core 11, 21 instead and fix the respective lens shaper 15, 25 to the associated lens barrel 30, 31.

As shown in Fig. 10, each of the two actuators 40 of the first lens 10 comprises a pusher 400 arranged outside the first lens barrel 30, wherein the respective pusher 400 is movable along the optical axis A of the first lens 10, wherein each of said pushers 400 of the first lens 10 is connected to one of said regions 500 of the lens shaping member 15 of the first lens 10 as described above to exert a force on the respective region 500 of the lens shaping member 15. Further, also each of the two actuators 41 of the second lens 20 comprises a pusher 410 that is movable along an optical axis A' of the second lens 20, wherein each of said pushers 410 of the second lens 20 is connected to one of said regions 510 of the lens shaping member 25 of the second lens 20 to exert a force on the respective region 510.

Particularly, regarding all embodiments relating to pushers 400, 410, different possibilities exist for connecting the respective pusher 400, 410 to its associated region 500, 510 of the respective lens shaping member 15, 25

Particularly, as shown in Fig. 14(A) the respective pusher 400, 410 can be connected to the respective region 500, 510 via a latching connection C1, wherein a section of the respective pusher 400, 410 engages with a recess of the respective region 500, 510.

Alternatively, as shown in Fig. 14(C), the respective pusher 400, 410 can be connected to the respective region 500, 510 via a glued connection C2.

Furthermore, the respective pusher 400, 410 can be connected to the respective region 500, 510 via a flexible piston C3.

Furthermore, referring to Fig. 10, each actuator 40 of the two actuators 40 of the first lens 10 comprises an electrically conducting coil 60 and a magnet structure 70 comprising a first section 70a having a first magnetization M1 and an adjacent second section 70b having a second magnetization M2, wherein the two magnetizations M1, M2 are antiparallel (i.e. are parallel but point in opposite directions) and particularly extend orthogonal to the optical axis A of the first lens 10.

Furthermore, the respective coil 60 comprises a first portion 60a and a second portion 60b, wherein the first portion 60a of the coil 60 faces the first section 70a of the magnet structure 70 whereas the second portion 60b of the coil 60 faces the second section 70b of the magnet structure 70. Further, particularly, the respective coil 60 comprises a conductor that extends around a coil axis C of the respective coil 60, wherein the coil axis C particularly extends parallel to the magnetizations M1, M2.

In the same fashion, also each actuator 41 of the two actuators 40 of the second lens 20 comprises an electrically conducting coil 61 and a magnet structure 71 comprising a first section 71a having a first magnetization M1 and an adjacent second section 71b having a second magnetization M2, wherein the two magnetizations M1, M2 are antiparallel and particularly extend orthogonal to an optical axis A' of the second lens 20. Further, the respective coil 61 comprises again a first portion 61a and a second portion 61b, wherein the first portion 61a of the respective coil 61 faces the first section 71a of the respective magnet structure 71 whereas the second portion 61b of the respective coil 61 faces the second section 71b of the respective magnet structure 71. Further, particularly, the respective coil 61 comprises a conductor that extends around a coil axis C' of the respective coil 61, wherein the respective coil axis C' particularly extends parallel to the magnetizations M1, M2.

As can be seen from Fig. 10, the embodiment realizes a so called moving coil configuration, i.e., the magnet structure 70 of the respective actuator 40 of the first lens 10 is rigidly coupled to the first lens barrel 30, whereas the coil 60 of the respective actuator 40 of the first lens 10 is arranged on the pusher 400 of the respective actuator 40 of the first lens 10 and thus moves with the respective pusher 400.

In the same fashion, the magnet structure 71 of the respective actuator 41 of the second lens 20 is rigidly coupled to the second lens barrel 31, whereas the coil 61 of the respective actuator 41 of the second lens 20 is arranged on the pusher 410 of the respective actuator 41 of the second lens 20 and thus moves with the respective pusher 410.

Furthermore, the pusher 400 of the respective actuator 40 of the first lens 10 is elastically coupled to the first lens barrel 30 via a spring structure 9 such that the pusher 400 of the respective actuator 40 of the first lens 10 is movable along the optical axis A of the first lens 10. In the same manner, the pusher 410 of the respective actuator 41 of the second lens 20 is elastically coupled to the second lens barrel 31 via a spring structure 9 such that the pusher 410 of the respective actuator 41 of the second lens 20 is movable along the optical axis A' of the second lens 20.

Further, in order to properly guide magnetic fluxes generates by the magnet structures 70, 71, the optical zoom device 1 can comprise two magnetic flux return structures 800, particularly in the form of an elongated plate, respectively. Particularly, each magnetic flux return structure 800 is connected to both sections 70a, 70b of a magnet structure 70 of an actuator 40 of the first lens 10 as well as to both sections 71a, 71b of a magnet structure 71 of an actuator 41 of the second lens 20. The respective return structure 800 is configured to guide or return the magnetic flux from a section 70a, 70b, 71a, 71b of the magnet structure 70, 71 to the adjacent section 70a, 70b, 71a, 71b of the magnet structure 70, 71 to which it is connected. Particularly, the respective magnetic flux return structure 800 can extend along the optical axis A of the first lens 10 and the optical axis A' of the second lens 20. Further, the two magnetic flux return structures 800 face each other in a direction perpendicular to the said optical axes A, A'. Particularly, the respective magnetic flux return structure 800 can be connected to or can be a part of a housing 7 or shield 8 enclosing the first and/or the second lens barrel 30, 31.

Now, in order to move the pushers 400, 410 of the actuators so as to adjust the focal lengths of the lenses and to provide image stabilization, the optical zoom device 1 is configured to apply an electrical current to the coil 60 of the respective actuator 40 of the first lens 10 for interacting with a magnetic field of the magnet structure 70 of the respective actuator 40 of the first lens 10 such that the pusher 400 of the respective actuator 40 of the first lens 10 is moved along the optical axis A of the first lens 10 wherein, depending on the direction of the current in the coil 60 of the respective actuator 40 of the first lens 10, the pusher 400 of the respective actuator 40 of the first lens 10 is either moved such along the optical axis A of the first lens 10 that the lens shaping member 15 of the first lens 10 presses against the membrane 13 of the first lens 10 or pulls on the membrane 13 of the first lens 10 to adjust the focal length of the first lens 10 and/or to stabilize said image. In each case the respective force is exerted by the respective pusher 400 on the lens shaping member 15 of the first lens 10 via the respective region 500. In case of equal forces on the regions 500, just the focal length of the first lens 10 is adjusted (see above). In case e.g. opposite forces are exerted on said regions 500 of the lens shaping member 15, the latter can be tilted for shifting the image in the first shifting direction D for providing optical image stabilization.

Analogously, the optical zoom device 1 is also configured to apply an electrical current to the coil 61 of the respective actuator 41 of the second lens 20 for interacting with a magnetic field of the magnet structure 71 of the respective actuator 41 of the second lens 20 such that the pusher 410 of the respective actuator 41 of the second lens 20 is moved along the optical axis A' of the second lens 20, wherein, depending on the direction of the current in the coil 61 of the respective actuator 41 of the second lens 20, the pusher 410 of the respective actuator 41 of the second lens 20 is either moved such along the optical axis A' of the second lens 20 that the lens shaping member 25 of the second lens 20 presses against the membrane 23 of the second lens 20 or pulls on the membrane 23 of the second lens 20 to adjust the focal length of the second lens 20 and/or to stabilize said image. In each case the respective force is exerted by the respective pusher 410 on the lens shaping member 25 of the second lens 20 via the respective region 510. In case of equal forces on the regions 510, again just the focal length of the second lens 20 is adjusted (see above). In case e.g. opposite forces are exerted on said regions 510 of the lens shaping member 25, the latter can be tilted for shifting the image in the second shifting direction D' for providing optical image stabilization. Thus, tilting both lens shaping members 15, 25 allows realizing a 2D shift of the image on the image sensor 2 if necessary. Particularly, the respective current flows in opposite directions in said two portions 60a, 60b, 61a, 61b of the respective coil 60, 61.

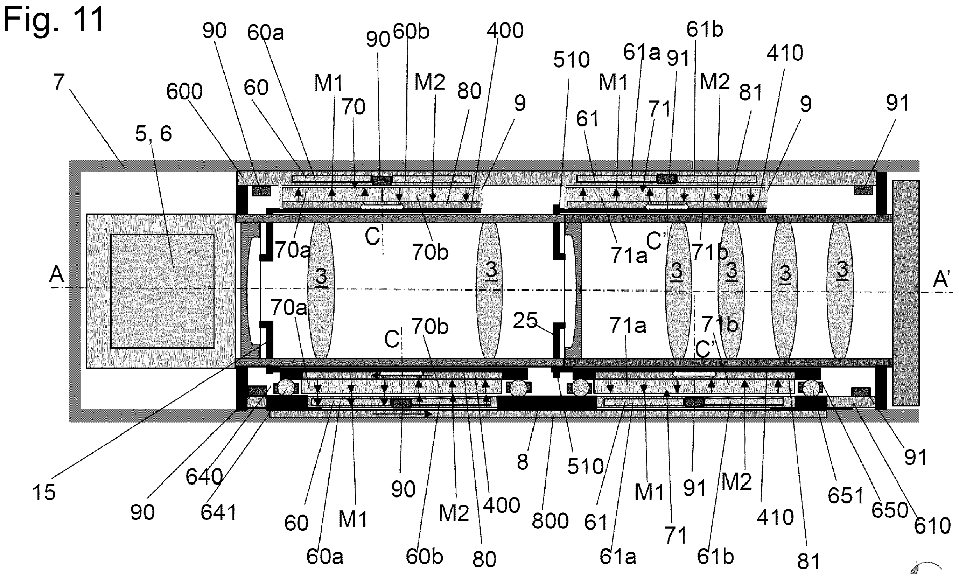

In contrast to Fig. 10, Fig. 11 shows an embodiment comprising an actuator configuration having so called moving magnets.

Here, the coil 60 of the respective actuator 40 of the first lens 10 is rigidly coupled to the first lens barrel 30, whereas the magnet structure 70 of the respective actuator 40 of the first lens 10 is arranged on the pusher 400 of the respective actuator 40 of the first lens 10. Furthermore, the coil 61 of the respective actuator 41 of the second lens 20 is rigidly coupled to the second lens barrel 31, whereas the magnet structure 71 of the respective actuator 41 of the second lens 20 is arranged on the pusher 410 of the respective actuator 41 of the second lens 20.

According to the upper half of Fig. 11, the respective coil 60, 61 can be embedded into a substrate 600, particularly in the form of a printed circuit board. Particularly, the optical zoom device 1 can comprise two (e.g. elongated) substrates 600 (e.g. printed circuit boards), wherein each substrate 600 comprises a coil 60 of an actuator 40 of the first lens 10 as well as a coil 61 of an actuator 41 of the second lens 20.

Particularly, the two substrates 600 can be connected to a housing 7 enclosing the first and/or the second lens barrel 30, 31. Particularly, the two substrates 600 can face each other in a direction perpendicular to the optical axis A of the first lens 10 and to the optical axis A' of the second lens 20.

Further, according to Fig. 11 (upper half), instead of having a common return structure 800 for two neighboring actuators 40, 41 of the first and the second lens 10, 20, each magnet structure 70, 71 is connected to a separate first magnetic flux return structure 80, 81. The respective magnetic flux return structure 80, 81 is configured to guide or return the magnetic flux coming from one section 70a, 70b, 71a, 71b of the magnet structure to the adjacent section 70a, 70b, 71a, 71b of the magnet structure 70, 71 to which it is connected. Particularly, these first magnetic flux return structures 80, 81 are each rigidly coupled to the associated pusher 400, 410 and thus move together with the respective pusher 400, 410.

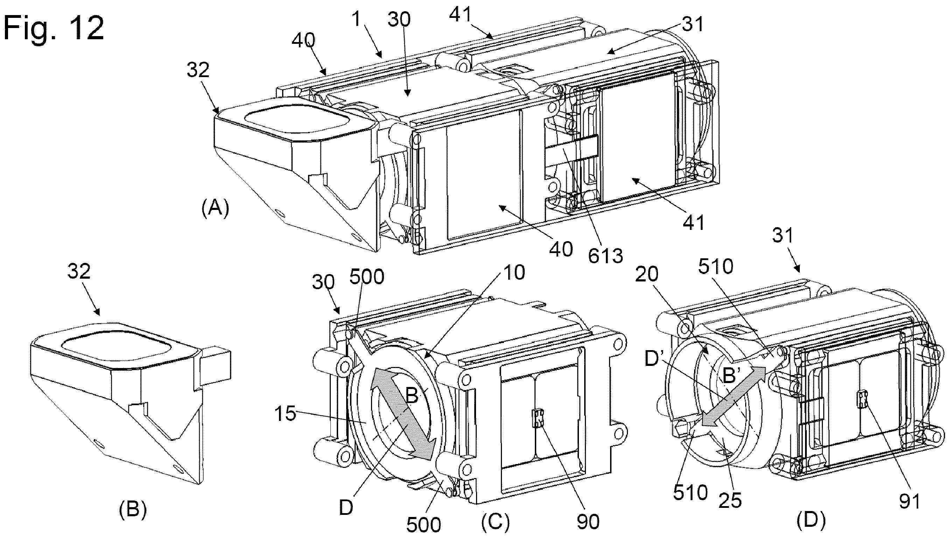

The lower half of Fig. 11 shows a further embodiment of the present invention in a schematical fashion. The Figs. 12, 14 to 17 show further illustrations of an embodiment of this kind.

Here, particularly, the optical zoom device 1 can comprise two substrate assemblies 610, wherein each substrate assembly 610 comprises two substrates 611, 612 electrically connected by a flexible connector 613 to provide electrical connections between the two substrates 611, 612, wherein one of the two substrates 611 comprises an embedded coil 60 of an actuator 40 of the first lens 10 while the other substrate 612 comprises a coil 61 of an actuator 41 of the second lens 20. Again, particularly, the two substrate assemblies 610 can face each other in a direction perpendicular to the optical axis A of the first lens 10 and the optical axis A' of the second lens 20.

Furthermore, besides the first return structures 80, 81 described in conjunction with Fig. 11 (upper half), the optical zoom device 1 can comprise two second magnetic flux return structures 800, particularly in the form of an elongated plate, respectively. Particularly, each second magnetic flux return structure 800 faces both sections 70a, 70b of a magnet structure 70 of an actuator 40 of the first lens 10 as well as both sections 71a, 71b of a magnet structure 71 of an actuator 41 of the second lens 20. The respective second return structure 800 is configured to guide or return the magnetic flux coming from a section 70a, 70b, 71a, 71b of the magnet structure 70, 71 to an adjacent section 70a, 70b, 71a, 71b of the magnet structure 70, 71. Particularly, the respective second magnetic flux return structure 800 can extend along the optical axis A of the first lens 10 and the optical axis A' of the second lens 20. Further, the two second magnetic flux return structures 800 face each other in a direction perpendicular to the said optical axes A, A'. Particularly, the respective magnetic flux return structure 800 can be connected to or can be a part of a housing 7 or shield 8 enclosing the first and/or the second lens barrel 30, 31. Thus, here, every coil 60, 61 of an actuator 40, 41 is arranged between a first and a second magnetic flux return structure 80, 81, 800.

Further, as particularly shown in Figs. 12 and 15 to 17, the respective actuator 40 of the first lens 10 comprises a coil holder 620 for holding a substrate 611 (and the coil 60 embedded therein) of a substrate assembly 610, via which coil holder 620 the respective coil 60 embedded into the substrate 611 is rigidly connected to the first lens barrel 30.

Further, the respective actuator 41 of the second lens 20 also comprises a coil holder 630 for holding a substrate 612 (and the coil 61 embedded therein) of a substrate assembly 610, via which coil holder 630 the respective coil 61 embedded into the substrate 612 is rigidly connected to the second lens barrel 31.

The respective coil holder 620, 630 can further comprise a recess 621, 631 for accommodating said flexible connector 613 that connects the two substrates 611, 612 of a substrate assembly 610.

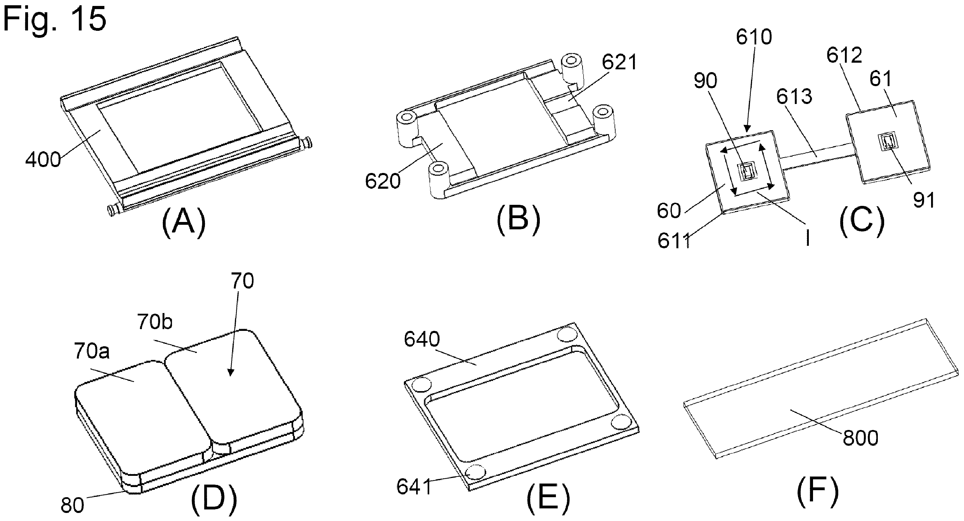

Furthermore, as shown in Fig. 11 (lower half) and Figs. 15 to 17 the pusher 400 of the respective actuator 40 of the first lens 10 is supported on ball bearings 641 such that the pusher 400 of the respective actuator 40 of the first lens 10 is movable along the optical axis A of the first lens 10. In the same fashion also the pusher 410 of the respective actuator 41 of the second lens 20 is supported on ball bearings 651 such that the pusher 410 of the respective actuator 41 of the second lens 20 is movable along the optical axis A' of the second lens 20.

Particularly, the respective pusher 400, 410 can be supported via said (e.g. four) ball bearings 641, 651 on the coil holder 620, 630 that may surround the first and/or second lens barrel 30, 31, and that may be rigidly coupled to the first and/or second lens barrel 30, 31.

Particularly, the respective actuator 40 of the first lens 10 can comprise a cage 640, e.g. in the form of a frame, for holding the respective ball bearing 641, particularly four ball bearings 641 can be held by corner regions of the cage 640. Likewise, the respective actuator 41 of the second lens 20 can comprise a cage 650, e.g. in the form of a frame, for holding the respective ball bearing 651. Also here four ball bearings 651 can be held by corner regions of the cage 650.

Furthermore, in the above-described embodiments the optical device 1 according to the present invention is preferably configured to measure a movement of the respective pusher 400 of the first lens 10 along the optical axis A of the first lens 10 using a sensor 90 associated to the respective pusher 400. Further, in the same fashion, the optical device 1 is preferably configured to measure a movement of the respective pusher 410 of the second lens 20 along the optical axis A' of the second lens 20 using a sensor 91 associated to the respective pusher 410.

Particularly, the respective sensor 90, 91 is a Hall sensor for measuring the movement of the respective magnet structure 70, 71

According to Figs. 11, 15 and 17, the respective Hall sensor can be arranged on the respective substrate 611, 612. Alternatively other positions that allow sensing the movement of the magnet structures 70, 71 are also conceivable (cf. Fig. 11). Further, in Fig. 15 also a possible current direction I is indicated for the coil 60.

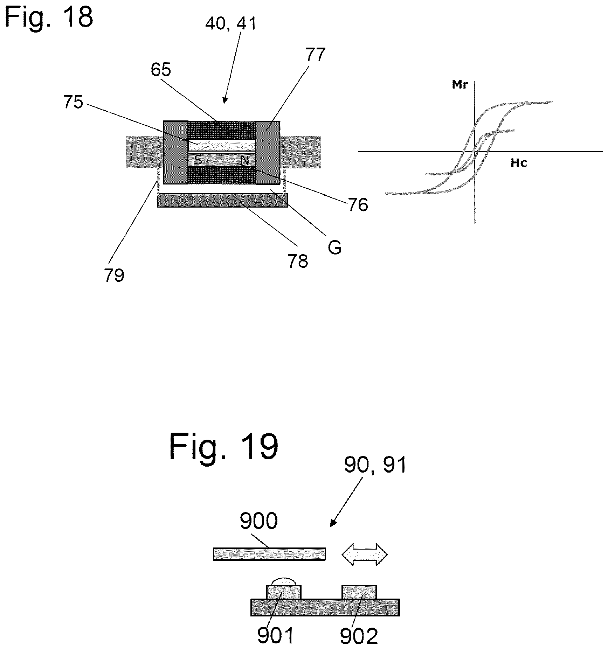

Alternatively also inductive sensors, or capacitive sensors can be employed. According to Fig. 19 also an optical sensor 90, 91 can be used. Such a sensor can comprise a moving mirror 900 (e.g. arranged on the respective pusher 400, 410) and a light source (e.g. LED) 901 that impinges light on the moving mirror. Reflected light is then detected by a photosensitive element (e.g. photo diode) 902. The intensity of the reflected light depends on the position of the moving mirror 900.

Furthermore, in the above embodiments generally all suitable actuator types can be used for the actuators 40, 41.

Particularly, according to Fig. 18, also actuators comprising electropermanent magnets 40, 41 can be used. Such an actuator 40, 41 comprises a first magnet 75 comprising a magnetization that can be switched by applying an electrical current to a coil 65 surrounding the first magnet. The actuator 40, 41 further comprises a permanent second magnet 76 extending along the first magnet. In case the two magnets 75, 76 comprise an antiparallel magnetization, no external magnetic field is generated. In case the magnetization of the first magnet is switched by means of a current pulse applied to coil 65, magnet flux is guided via the return structure and the (air) gap G to the magnetic flux guiding structure 78 and the latter is attracted towards the return structure against the action of the spring structure 79 that connects the magnetic flux guiding structure 78 to the return structure 77.

Particularly, the magnetic flux guiding structure can be connected to a lens shaping member 15, 25 or to a lens core 11, 21 to adjust the focal length or to provide optical image stabilization as described herein.

Furthermore, different current levels in the coil 65 results in different Hc values. These magnetic fields from the coil 65 program the electropermanent magnet 40, 41 on a desired Mr value.

A tuning of the actuator 40, 41 can be achieved by using the inductivity of the coil 65, e.g. by means of the switching time, by means of the applied voltage, by means of a PWM signal (any shape).

Finally, Fig. 6 shows a further aspect of the present invention which relates to a device 1' comprising an optical zoom device 1 according to the present invention and a camera 1" having a wider field of view than the optical zoom device 1, wherein said camera 1" has a lower F-number than the optical zoom device 1. Such a device 1' can e.g. be used in mobile phones or other handheld devices and allows to have a very good optical quality for wide field of view cameras and still give a good optical zoom effect with less constraints on the F-number.

## Claims

1. Optical zoom device (1), comprising
- a first lens (10) having an adjustable focal length and a second lens (20) having an adjustable focal length, wherein each lens (10, 20) comprises a lens core (11, 21) filled with a transparent fluid (12, 22), wherein the respective lens core (11, 21) comprises a transparent first wall (13, 23) in the form of an elastically deformable membrane and a transparent second wall (14, 24) facing the first wall (13, 23), wherein the fluid (12, 22) is arranged between the two walls (13, 23; 14, 24) of the respective lens core (11, 21), and wherein the respective lens (10, 20) comprises a lens shaping member (15, 25) interacting with the respective membrane (13, 23) for adjusting the focal length of the respective lens (10, 20) and/or for stabilizing an image generated with help of the two lenses (10, 20),
- wherein the optical zoom device (1) comprises a first and a separate second lens barrel (30, 31), wherein the first lens core (11) is mounted on the first lens barrel (30) and the second lens core (21) is mounted on the second lens barrel (31),
- wherein the optical zoom device (1) comprises at least one actuator (40) associated to the first lens (10) for generating said interaction of the lens shaping member (15) of the first lens (10) with the membrane (13) of the first lens (10) for adjusting said focal length of the first lens (10), as well as at least one actuator (41) associated to the second lens (20) for generating said interaction of the lens shaping member (25) of the second lens (20) with the membrane (23) of the second lens (20) for adjusting said focal length of the second lens (20), and wherein
- the at least one actuator (40) of the first lens (10) is configured to move the lens shaping member (15) of the first lens (10) with respect to the lens core (11) of the first lens (10) for adjusting the focal length of the first lens (10) or that the at least one actuator (40) of the first lens (10) is configured to move the lens core (11) of the first lens (10) with respect to the lens shaping member (15) of the first lens (10) for adjusting the focal length of the first lens (10); and/or that the at least one actuator (41) of the second lens (20) is configured to move the lens shaping member (25) of the second lens (20) with respect to the lens core (21) of the second lens (20) for adjusting the focal length of the second lens (20) or that the at least one actuator (41) of the second lens (20) is configured to move the lens core (21) of the second lens (20) with respect to the lens shaping member (25) of the second lens (20) for adjusting the focal length of the second lens (20).

2. Optical zoom device according to claim 1, **characterized in that** the first lens (10) has an outer diameter (D1) that is equal to or larger than an outer diameter of the first lens barrel (D2), wherein the first lens barrel (30) comprises an opening (301) for holding the first lens (10), and/or wherein the second lens (20) has an outer diameter that is equal to or larger than to an outer diameter of the second lens barrel (31), wherein the second lens barrel (31) comprises an opening (311) for holding the second lens (20).

3. Optical zoom device according to one of the preceding claims, **characterized in that** the optical zoom device (1) comprises a prism (5) or a mirror (6), and wherein the optical zoom device (1) comprises a third barrel (32) holding the prism (5) or the mirror (6), which third barrel (32) is connected to the first barrel (30), so that the first lens (10) is arranged between the prism (5) or the mirror (6) and the second lens (20) in the optical path of the optical zoom device (1)

4. Optical zoom device according to claim 3, **characterized in that** the prism (5) or mirror (6) is arranged between the first lens (10) and the second lens (20) in the optical path of the optical zoom device (1).

5. Optical zoom device according to one of the preceding claims, **characterized in that** the optical zoom device (1) comprises an image sensor (2), wherein the image sensor (2) is mounted to the second lens barrel (31).

6. Optical zoom device according to one of the preceding claims, **characterized in that** the first lens (10) comprises two, three or four actuators (40) that are configured to move the lens shaping member (15) of the first lens (10) with respect to the lens core (11) of the first lens (10) for adjusting the focal length of the first lens (10) or that are configured to move the lens core (11) of the first lens (10) with respect to the lens shaping member (15) of the first lens (10) for adjusting the focal length of the first lens (10); and/or that the second lens (20) comprises two, three or four actuators (41) that are configured to move the lens shaping member (25) of the second lens (20) with respect to the lens core (21) of the second lens (20) for adjusting the focal length of the second lens (20) or that are configured to move the lens core (21) of the second lens (20) with respect to the lens shaping member (25) of the second lens (20) for adjusting the focal length of the second lens (20).

7. Optical zoom device according to claim 6, **characterized in that** the optical zoom device (1) is configured to tilt the lens shaping member (15) of the first lens (10) with respect to the lens core (11) of the first lens (10) using said actuators (40) of the first lens (10) for stabilizing said image or that the optical zoom device (1) is configured to tilt the lens core (11) of the first lens (10) with respect to the lens shaping member (15) of the first lens (10) using said actuators (40) of the first lens (10) for stabilizing said image; and/or that the optical zoom device (1) is configured to tilt the lens shaping member (25) of the second lens (20) with respect to the lens core (21) of the second lens (20) using said actuators (41) of the second lens (20) for stabilizing said image or that the optical zoom device (1) is configured to tilt the lens core (21) of the second lens (20) with respect to the lens shaping member (25) of the second lens (20) using said actuators (41) of the second lens (20) for stabilizing said image.

8. Optical zoom device according to one of the preceding claims **characterized in that** the optical zoom device (1) is configured to use merely the first or the second lens (10, 20) for stabilizing said image.

9. Optical zoom device according to one of the claims 5 to 6 **characterized in that** the optical zoom device (1) is configured to one of:
- shift the first lens (10) perpendicular to an optical axis (A) of the first lens (10) with respect to the image sensor (2) to stabilize the image and/or shift the second lens (20) perpendicular to an optical axis (A') of the second lens (20) with respect to the image sensor (2) to stabilize the image,
- shift a rigid lens (3) perpendicular to an optical axis (A) of the first lens (10) with respect to the image sensor (2) to stabilize the image and/or shift a rigid lens (3) perpendicular to an optical axis (A') of the second lens (20) with respect to the image sensor (2) to stabilize the image and/or shift a rigid lens (3) perpendicular to an optical axis (A") of the third lens barrel (32) with respect to the image sensor (2) to stabilize the image,
- shift the image sensor (2) perpendicular to an optical axis (A) of the first lens (10) with respect to the first lens (10) to stabilize the image, and/or shift the image sensor (2) perpendicular to an optical axis (A') of the second lens (20) with respect to the second lens (20) to stabilize the image.

10. The optical zoom device according to one of the preceding claims, **characterized in that** the lens shaping member (15) of the first lens (10) defines an area (13a) of the membrane (13) of the first lens (10) that has an adjustable curvature, and/or that the lens shaping member (23) of the second lens (20) defines an area (23a) of the membrane (23) of the second lens (20) that has an adjustable curvature.

11. Optical zoom device according to one of the preceding claims, **characterized in that** the first lens (10) comprises a single linear actuator (40) that is configured to move the lens core (11) of the first lens (10) with respect to the lens shaping member (15) of the first lens (10) for adjusting the focal length of the first lens (10), and wherein the second lens (20) comprises four linear actuators (41) that are configured to move the lens core (21) of the second lens (20) with respect to the lens shaping member (25) of the second lens (20) for adjusting the focal length of the second lens (20) and to tilt the lens core (21) of the second lens (20) about two different axes (a, a') for stabilizing said image.

12. Optical zoom device according to claim 5 or according to one of the claims 6 to 11 when referring to claim 5, **characterized in that** the optical zoom device (1) is configured to adjust the focal length of the first and the second lens (10, 20) in concert to generate a particular zoom range and a sharp image on the image sensor (2).

13. Optical zoom device according to claim 5 or according to one of the claims 7 to 12 when referring to claim 5, **characterized in that** the first lens (10) is configured to define the field of view of the optical zoom device (1) and the second lens (20) is configured to focus an image generated by the optical zoom device (1) on the image sensor (2).

14. Optical zoom device according to one of the preceding claims, **characterized in that** the optical zoom device (1) is configured to receive an output signal of a gyroscope (100) coupled to the optical zoom device (1), which output signal is indicative of an unwanted movement of the optical zoom device (1), wherein the optical zoom device is configured to use said output signal to stabilize said image in order to counteract said unwanted movement.

15. Device (1') comprising an optical zoom device (1) according to one of the preceding claims and a camera (1") having a wider field of view than the optical zoom device (1), wherein said camera (1") has a lower F-number than the optical zoom device (1).
